# EUROPÄISCHE PATENTSCHRIFT

(11) **EP 1 345 981 B1**
(45) Veröffentlichungstag und Bekanntmachung des Hinweises auf die Patenterteilung: **15.06.2005**
(21) Anmeldenummer: 01986413.1
(22) Anmeldetag: 14.12.2001
(51) Int. Cl.: C08G 65/32

(54) **VERFAHREN ZUR HERSTELLUNG VON ALKYLPOLYALKYLENGLYCOLESTERN MONOETHYLENISCH UNGESÄTTIGTER CARBONSÄUREN**
METHOD FOR PRODUCING ALKYLPOLYALKYLENE GLYCOL ESTERS OF MONOETHYLENICALLY UNSATURATED CARBOXYLIC ACIDS
PROCEDE DE PRODUCTION D'ALKYLPOLYALKYLENEGLYCOLESTERS D'ACIDES CARBOXYLIQUES INSATURES MONOETHYLENIQUEMENT

(30) Priorität: 20.12.2000 DE 10063511
(43) Veröffentlichungstag der Anmeldung: 24.09.2003
(73) Patentinhaber: BASF AKTIENGESELLSCHAFT, 67056 Ludwigshafen (DE)
(72) Erfinder: KRONER, Matthias, 67304 Eisenberg (DE); PFISTER, Jürgen, 67346 Speyer (DE); FAUL, Dieter, 67150 Niederkirchen (DE); RAUBENHEIMER, Hans-Jürgen, 68775 Ketsch (DE); BÜCHNER, Karl-Heinz, 68804 Altlussheim (DE)
(86) Internationale Anmeldenummer: PCT/EP2001/014784
(87) Internationale Veröffentlichungsnummer: WO 2002/050160

(56) Entgegenhaltungen:
- EP-A- 0 884 290
- EP-A- 0 989 108
- EP-A- 1 090 901
- DE-A- 2 516 933

## Beschreibung

Die Erfindung betrifft ein Verfahren zur Herstellung von Alkylpolyalkylenglycolestern monoethylenisch ungesättigter Carbonsäuren durch Verestern (a) monoethylenisch ungesättigter Carbonsäuren mit (b) Polyalkylenglykolen, die einseitig endgruppenverschlossen sind, in Substanz in Gegenwart von Polymerisationinhibitoren und Veresterungskatalysatoren bei Temperaturen bis höchstens 160°C.

Aus der DE-A 25 16 933 ist ein Verfahren zur Herstellung polymerisierbarer Ester aus einem Polyalkylenglykol oder einem Etheralkohol-Derivat eines Alkylenglykols oder Polyalkylenglykols als Alkoholkomponente mit ethylenisch ungesättigten Carbonsäuren bekannt, wobei man eine Mischung aus der Alkoholkomponente und einem Kohlenwasserstoff als Lösemittel mit Natriumborhydrid behandelt, um die in den Alkoholen enthaltenen Peroxide zu zersetzen. Die Alkoholkomponente wird anschließend beispielsweise mit Acrylsäure oder Methacrylsäure in Abwesenheit von Sauerstoff in Gegenwart eines Veresterungskatalysators und eines Polymerisationsinhibitors wie Phenothiazin verestert. Die eingesetzten Kohlenwasserstoffe müssen nach der Veresterung aus dem Reaktionsgemisch entfernt werden.

Weitere Verfahren zur Veresterung von alkoxilierten Alkoholen mit Acrylsäure oder Methacrylsäure sind beispielsweise aus EP-A-0 989 108 und EP-A-0 989 109 bekannt. Wie aus den Beispielen dieser Literaturstellen hervorgeht, erfolgt auch hier die Veresterung in Gegenwart eines Schleppmittels, um das bei der Veresterung entstandene Wasser azeotrop aus dem Reaktionsgemisch zu entfernen. Als Schleppmittel werden z.B. Cyclohexan oder Benzol verwendet. Nach Abschluß der Veresterung müssen die Schleppmittel aus dem Reaktionsgemisch entfernt werden.

Um Ester aus monoethylenisch ungesättigten Carbonsäuren und Polyglykolethern herzustellen, kann man sich außer der direkten Veresterung dieser Verbindungen auch Umesterungsreaktionen bedienen. So erhält man beispielsweise Alkoxypolyglykolester der Acrylsäure bzw. Methacrylsäure durch Umesterung von Methylacrylat oder Ethylacrylat mit Alkoxypolyglykolen in Gegenwart eines Umesterungskatalysators. Das Reaktionsgemisch wird nach der Lehre der DE-A-196 02 035 beispielsweise unter Einleitung von Luft auf eine Temperatur in dem Bereich von 110 bis 118°C erhitzt, wobei ein azeotropes Gemisch aus Methylacrylat und Methanol abdestilliert wird.

Ein weiteres Umesterungsverfahren ist beispielsweise aus der US-A-5 037 978 bekannt, wobei man Hafniumacetylacetonat als Umesterungskatalysator für die Herstellung von Alkylpolyalkylenglykol(meth)acrylaten verwendet.

Die oben angegebenen Verfahren haben den Nachteil, daß man das dabei jeweils verwendete Lösemittel nach der Veresterung in einer weiteren Verfahrensstufe abtrennen muß. Bei den bekannten Verfahren zur Veresterung bzw. Umesterung mit Polyalkylenglykolen ist außerdem die Reproduzierbarkeit nicht in ausreichendem Maße gegeben, so daß Produkte mit stark schwankender Qualität erhalten werden.

Der vorliegenden Erfindung liegt die Aufgabe zugrunde, ein verbessertes Veresterungsverfahren für Alkylpolyalkylenglykole zur Verfügung zu stellen, das reproduzierbar ist, in Abwesenheit von organischen Lösemitteln abläuft und bei dem der Anteil an unverestertem Alkylpolyalkylenglykol möglichst niedrig ist.

Die Aufgabe wird erfindungsgemäß gelöst mit einem Verfahren zur Herstellung von Alkylpolyalkylenglykolestern monoethylenisch ungesättigter Carbonsäuren durch Verestern (a).monoethylenisch ungesättigter Carbonsäuren mit (b) Polyalkylenglykolen, die einseitig endgruppenverschlossen sind, in Substanz in Gegenwart von Polymerisationinhibitoren und Veresterungskatalysatoren bei Temperaturen bis höchstens 160°C, wobei wenn man die Veresterung zunächst unter Atmosphärendruck oder Drücken bis zu 50 bar durchführt, dann das bei der Veresterung entstandene Wasser unter einem Druck von 10 bis 500 mbar aus dem Reaktiongemisch destilliert und danach die Veresterung unter Atmosphärendruck oder Drücken bis zu 50 bar weiterführt, dadurch gekennzeichnet, dass man die Veresterung bei einer Temperatur von 100 bis 140°C bis zur Gleichgewichtsreaktion durch führt, dann den Druck auf 50 bis 200 mbar erniedrigt um das bei der Veresterung entstandene Wasser aus dem Reaktionsgemisch zu entfernen, und das Reaktionsgemisch dann erneut bei 100 bis 140°C unter Atmosphärendruck oder Drücken bis zu 50 bar bis zur Einstellung der Gleichgewichtsreaktion verestert. Da die Veresterung in manchen Fällen nach einmaligem Entfernen des gebildeten Wassers unter einem Druck von 10 bis 500 mbar nicht vollständig ist, kann die oben angegebene Reihenfolge der Verfahrensschritte - Verestern und Abdestillieren von Wasser unter vermindertem Druckmehrmals durchgeführt werden, z.B. 2 bis 5 mal, vorzugsweise destilliert man nur 1 mal Wasser bei 10 bis 500 mbar aus dem Reaktionsgemisch ab.

Bevorzugt bei der Veresterung eingesetzte Stoffe sind
(a) mindestens eine monoethylenisch ungesättigte Carbonsäure mit 3 bis 5 C-Atomen und
(b) einseitig endgruppenverschlossene Polyalkylenglykole der Formel

   HO - (A - O) ₙ - R¹ (I),

   in der
   - A: eine Alkylengruppe mit 2 bis 4 C-Atomen oder -CH₂-CH₂-CH₂-CH₂- ist,
   - R¹: für C₁- bis C₃₀-Alkyl, Aryl oder C₁- bis C₁₈-Alkylphenyl steht und
   - n: eine Zahl von 2 bis 300 ist.

Als Verbindungen der Komponente (a) kommen monoethylenisch ungesättigte Carbonsäuren in Betracht. Beispiele hierfür sind Acrylsäure, Methacrylsäure, Maleinsäure und Fumarsäure. Sofern die Anhydride dieser Carbonsäuren leicht zugänglich sind, wie beispielsweise Maleinsäureanhydrid, können auch die Anhydride zur Veresterung eingesetzt werden. Bevorzugt werden aus dieser Gruppe von Verbindungen Acrylsäure oder Methacrylsäure verwendet.

Bei den Verbindungen der Gruppe (b) handelt es sich um alkoxilierte Alkohole oder Phenole. Ein Mol eines Alkohols bzw. Phenols wird mit 2 bis 300, vorzugsweise 3 bis 100 mol eines Alkylenoxids mit 2 bis 4 C-Atomen umgesetzt. Als Alkylenoxide kommen beispielsweise Ethylenoxid, Propylenoxid und Butylenoxide in Betracht. Man kann entweder ein einziges Alkylenoxid oder eine Mischung aus 2 oder 3 verschiedenen Alkylenoxiden an die Alkohole oder Phenole anlagern. Wenn man bei der Alkoxylierung mindestens zwei verschiedene Alkylenoxide einsetzt, so können die Alkylenoxideinheiten in den alkoxylierten Produkten entweder statistisch verteilt oder in Form von Blöcken angeordnet sein. Bevorzugt eingesetzte Alkylenoxide für die Alkoxylierung sind Ethylenoxid und Propylenoxid. Besonders bevorzugt sind die Ethylenoxidaddukte an C₁- bis C₁₈-Alkohole.

Beispiele für alkoxylierte Alkohole sind:
Methylpolyethylenglykole, die 5, 10, 20, 40, 100 oder 200 Ethylenoxideinheiten enthalten und durch Reaktion von Methanol mit Ethylenoxid erhältlich sind, wobei man auf 1 mol Methanol 5, 10, 20, 40, 100 oder 200 mol Ethylenoxid einwirken läßt, Ethylpolyethylenglykol enthaltend 15 Ethylenoxideinheiten, Butylpolyethylenglykol mit 5 Ethylenoxideinheiten, Dodecylpolyethylenglykol mit 40 Ethylenoxideinheiten, Isododecylpolyethylenglykol mit 5 Ethylenoxideinheiten, Octadecylpolyethylenglykol mit 5 Ethylenoxideinheiten, Stearylpolyethylenglykol mit 5 Ethylenoxideinheiten
sowie folgende Alkoxylierungsprodukte:
C₁₀-Oxoalkoholethoxylat mit 12 Ethylenoxideinheiten
C₁₂-C₁₄-Fettalkoholethoxylat mit 3 Ethylenoxideinheiten
C₁₂-C₁₄-Fettalkoholethoxylat mit 8 Ethylenoxideinheiten
C₁₃-Oxoalkoholethoxylat mit 3 Ethylenoxideinheiten
C₁₃-Oxoalkoholethoxylat mit 8 Ethylenoxideinheiten
C₁₃-Oxoalkoholethoxylat mit 20 Ethylenoxideinheiten
C₁₃-C₁₅-Oxoalkoholethoxylat mit 3 Ethylenoxideinheiten
C₁₃-C₁₅-Oxoalkoholethoxylat mit 7 Ethylenoxideinheiten
C₁₃-C₁₅-Oxoalkoholethoxylat mit 30 Ethylenoxideinheiten
C₁₆-C₁₈-Oxoalkoholethoxylat mit 11 Ethylenoxideinheiten
C₁₆-C₁₈-Oxoalkoholethoxylat mit 25 Ethylenoxideinheiten
C₁₆-C₁₈-Oxoalkoholethoxylat mit 50 Ethylenoxideinheiten
C₁₆-C₁₈-Oxoalkoholethoxylat mit 80 Ethylenoxideinheiten
C₉-Alkylphenolethoxylat mit 6 Ethylenoxideinheiten
C₉-Alkylphenolethoxylat mit 20 Ethylenoxideinheiten
Oleylaminethoxylat mit 12 Ethylenoxideinheiten
Kokosfettaminethoxylat mit 5 Ethylenoxideinheiten
Talgfettaminethoxylat mit 15 Ethylenoxideinheiten
Ölsäureamidethoxylat mit 10 Ethylenoxideinheiten
Methylpolyalkylenglykole, die 10 Ethylenoxid- und 2 Propylenoxideinheiten in statistischer Verteilung enthalten,
Methylpolyalkylenglykole mit blockweiser Anordnung von 20 Ethylenoxid- und 5 Propylenoxideinheiten, die durch Ethoxylierung von 1 mol Methanol mit 20 mol Ethylenoxid und anschließende Anlagerung von 5 mol Propylenoxid erhältlich sind,
Methylpolypropylenglykol mit 5 Propylenoxideinheiten Methylpolypropylenglykol mit 40 Propylenoxideinheiten Allylalkoholethoxylat mit 20 Ethylenoxideinheiten Allylalkoholpropoxylat mit 5 Propylenoxideinheiten.

Das Molverhältnis von (a) monoethylenisch ungesättigten Carbonsäuren zu (b) einseitig endgruppenverschlossenen Polyalkylenglykolen beträgt bei der Veresterung beispielsweise 1:1 bis 100:1 und liegt bevorzugt in dem Bereich von 1:1 bis 10:1.

Um die Geschwindigkeit der veresterungsreaktion zu erhöhen, verwendet.man einen Katalysator. Als Katalysator können beispielsweise alle organischen und anorganischen Säuren eingesetzt werden. Beispiele sind Schwefelsäure, schweflige Säure, Dischwefelsäure, Polyschwefelsäuren, Schwefeltrioxid, Methansulfonsäure, Benzolsulfonsäure, C₁-C₃₀-Alkylbenzolsulfonsäuren, wie p-Toluolsulfonsäure, Dodecylbenzolsulfonsäure, Naphthalinsulfonsäure, Schwefelsäuremonoester von C₁-C₃₀-Alkoholen, wie Dodecylsulfat, Phosphorsäure, phosphorige Säure, unterphosphorige Säure, Polyphosphorsäure, Chlorwasserstoffsäure, Perchlorsäure, saure Ionenaustauscher, Lewissäuren, wie Bortrichlorid, Aluminiumsulfat und Eisentrichlorid. Der Katalysator wird z.B. in Mengen von 0,01 bis 10, vorzugsweise 0,05 bis 5 Gew.-%, bezogen auf das gesamte Reaktionsgemisch, eingesetzt.

Bei der Veresterung setzt man die Komponenten (a) und (b) vorzugsweise in wasserfreier Form ein. Die vollständige Entfernung von Wasser aus Polyalkylenglykole enthaltenden Reaktionsmischungen mit Hilfe einer Destillation ist schwierig, weil bei der Veresterung nur relativ geringe Mengen Wasser, bezogen auf das eingesetzte Polyalkylenglykol, entstehen. So bilden sich beispielsweise bei der veresterung eines Methylpolyethylenglykols mit 22 Ethylenoxideinheiten (Molmasse ca. 1000) 18 g Wasser, entsprechend 1,8 Gew.-%. Da Wasser mit Polyalkylenglykolen Wasserstoffbrückenbindungen eingeht, sinkt der Aktivitätskoeffizient des Wassers auf ca. 0,3, d.h., daß der Dampfdruck des Wassers über einer Polyalkylenglykol enthaltenden Mischung nicht dem von reinem Wasser entspricht, sondern deutlich niedriger ist. Die Flüchtigkeit des Wassers reicht deshalb nicht aus, daß es bei Normaldruck abdestilliert werden kann. Eine ausreichende Flüchtigkeit des Wassers kann nur dann erreicht werden, wenn der Druck über der Reaktionsmischung auf 500 mbar oder darunter, bevorzugt unterhalb von 200 mbar gesenkt wird. Unter den angegebenen Drükken kommt das entstandene Wasser zum Sieden und kann aus der Reaktionsmischung abdestilliert werden. Der Druck könnte zwar während der gesamten Dauer der Veresterung auf 500 mbar oder darunter reduziert werden, jedoch destillieren in diesem Fall auch ungesättigte Carbonsäuren, wie Acrylsäure oder Methacrylsäure, ständig aus dem Reaktionsgemisch ab. Bei der erfindungsgemäßen Veresterung der Komponenten (a) und (b) wird daher so verfahren, daß man zunächst die Veresterung bei Atmosphärendruck oder vorzugsweise bei Drücken bis zu 50 bar durchführt und erst nach einer teilweisen Veresterung, z.B. 30 bis 90 mol-%, das während dieser Zeit gebildete Reaktionswasser unter einem Druck von 10 bis 500 mbar aus dem Reaktionsgemisch destilliert und danach den Druck wieder auf Atmosphärendruck oder bis zu 50 bar erhöht. Das Abdestillieren von Wasser unter einem Druck von 500 mbar oder darunter dauert beispielsweise 1 Minute bis zu 5 Stunden und liegt vorzugsweise in dem Bereich von 10 Minuten bis 2 Stunden. Während der Veresterung wird das Abdestillieren von Wasser bei 500 mbar oder darunter und anschließende Druckerhöhung auf Atmosphärendruck oder bis zu 50 bar und weitere Veresterung der Komponenten (a) und (b) mehrmals wiederholt. Diese verfahrensweise ist dann besonders vorteilhaft, wenn möglichst wenig ungesättigte Carbonsäure aus dem Reaktionsgemisch abdestilliert werden soll. Man kann beispielsweise eine Reaktionsmischung aus 1 mol Methylpolyethylenglykol einer Molmasse von 1000 mit 4 mol Methacrylsäure katalytisch bei 1013 mbar für 4 Stunden verestern, ohne das entstehende Wasser abzudestillieren. Dabei findet eine Gleichgewichtseinstellung statt, bei der die Veresterung zu ca. 85 mol-% auf der Seite des Esters liegt. Sobald die Veresterung bei einer Temperatur von beispielsweise 100 bis 140°C bis zur Gleichgewichtsreaktion abgelaufen ist, senkt man für beispielsweise 20 Minuten den Druck auf 100 mbar und destilliert das entstandene Reaktionswasser ab und stellt danach den Druckausgleich mit der Atmosphäre (in diesem Fall 1013 mbar) wieder her. Durch das Abdestillieren des Wassers stellt sich jetzt wieder eine Gleichgewichtsmischung aus den verbleibenden 15 mol-% Methylpolyalkylenglykol und der überschüssigen Methacrylsäure ein, wobei wieder aus den 15 mol-% Polyether ein ca. 85 mol-%iger Veresterungsgrad resultiert. In der Summe wird also 85 + (0,15 x 85) = 97 mol-% Veresterung, bezogen auf Methylpolyethylenglykol, erreicht.

Bei einem Molverhältnis von Methylpolyethylenglykol einer Molmasse von 1000 und Methacrylsäure von 1:2 stellt sich beispielsweise bei einem Druck von 3 bar nach 4 Stunden bei einer Temperatur von 120 bis 130°C eine Gleichgewichtsveresterung von ca. 60 mol-% ein. Erniedrigt man dann den Druck auf 100 mbar und destilliert unter diesem Druck das bei der Veresterung entstandene Wasser aus dem Reaktionsgemisch innerhalb von 30 Minuten ab und erhöht den Druck wieder auf 3 bar, so beträgt der Veresterungsgrad des Reaktionsgemisches nach einer weiteren 3-stündigen Veresterungszeit 60 + (0,6 x 40) = 84 mol-%. Wird das Wasser nach weiteren 3 Stunden Veresterungszeit innerhalb von 30 Minuten bei 100 mbar abdestilliert, die Druckerhöhung auf 3 bar vorgenommen und das Reaktionsgemisch nochmals 3 Stunden bei 120°C verestert, so erhält man 84 + (0,6 x 16) = 92 mol-% Veresterungsgrad.

Die Durchführung der Veresterung bei erhöhtem Druck, also bei Drücken bis zu 50 bar, insbesondere bei Drücken bis zu 16 bar oder bis zu 10 bar, kann vorteilhaft sein, weil dadurch die Flüchtigkeit der organischen Säuren erniedrigt wird. Besonders bei Acrylsäure und Methacrylsäure können die Dämpfe, die sich entsprechend dem Partialdruck über der veresterungsmischung einstellen, zu Problemen mit unerwünschter Polymerbildung führen. Die Polymerbildung wird verursacht durch Kondensation der Dämpfe am kälteren Reaktordeckel und der Polymerisation der sich dort bildenden Tröpfchen. Wird der Druck über der Veresterungsmischung durch Aufpressen von Inertgasen, beispielsweise Stickstoff oder auch Luft, erhöht, so wird die Verdunstung der organischen Säuren verhindert.

Eine besondere Vorbehandlung der einseitig endgruppenverschlossenen Polyalkylenglykole ist nicht erforderlich. Um unerwünschte Polymerisationen während der Veresterung zu inhibieren, setzt man Polymerisationsinhibitoren ein. Üblicherweise werden hierfür Phenothiazin, Schwefeldioxid, Hydrochinonmonomethylether oder 2,4-Di-tertbutyl-para-kresol verwendet. Die Menge an Inhibitoren beträgt beispielsweise 10 ppm bis 1 Gew.-%, bezogen auf die bei der veresterung eingesetzten monoethylenisch ungesättigten Carbonsäuren. Phenothiazin wird meistens in Mengen von 0,05 bis 5 Gew.-%, bezogen auf die monoethylenisch ungesättigte Carbonsäuren, verwendet.

Bei der Veresterung setzt man vorzugsweise
(a) Acrylsäure, Methacrylsäure, Maleinsäure, Fumarsäure und/oder Maleinsäureanhydrid und
(b) einseitig mit C₁-C₄-Alkylendgruppen verschlossene Polyalkylenglykole mit Molmassen von 100 bis 10000 ein.

Besonders bevorzugt ist die Veresterung von
(a) Acrylsäure und/oder Methacrylsäure und
(b) einseitig mit einer Methylgruppe endgruppenverschlossenen Polyethylenglykolen.

Die Temperaturen bei der Veresterung betragen höchstens 160°C und liegen bevorzugt in dem Bereich von 100 bis 140°C. Die Dauer der Veresterung beträgt beispielsweise 1 bis 20, vorzugsweise 5 bis 15 Stunden. Die Veresterung wird vorzugsweise mit einem Überschuß an monoethylenisch ungesättigter Carbonsäure durchgeführt, weil die dabei entstehenden Reaktionsmischungen im Anschluß an die Veresterung zur Herstellung von Copolymerisaten verwendet werden. Solche Copolymerisate aus beispielsweise Methacrylsäure und Methylpolyalkylenglykolen werden als Betonverflüssiger verwendet. Beispielsweise stellt man ein Copolymerisat aus 4 mol Methacrylsäure und 1 mol Methylpolyethylenglykolmethacrylat her, indem man bei der Veresterung 5 mol Methacrylsäure und 1 mol des Methylpolyethylenglykols (Anlagerungsprodukt von 20 mol Ethylenoxid an 1 mol Methanol) einsetzt und den bei der Veresterung erhältlichen Ester ohne weitere Reinigung polymerisiert.

Die Veresterung wird in üblichen Apparaturen durchgeführt, z.B. in Kolben, Kesseln oder Reaktoren, die mit einem Rührer oder einer Vorrichtung zum Durchmischen versehen sind. Zur effektiven Verdampfung des Wassers aus dem Reaktionsgemisch kann auch ein Dünnschicht- oder Fallfilmverdampfer verwendet werden. Das Wasser wird über eine Destillationsbrücke oder Siedeleitung abdestilliert. Um den Anteil an ungesättigten Carbonsäuren im Destillat zu reduzieren, kann es von Vorteil sein, eine Destillationskolonne zu verwenden. Sie kann gegebenenfalls mehrere Böden enthalten. Als Bodenmaterial können beispielsweise Siebe, Füllkörper oder Glockenböden eingesetzt werden. Mit Hilfe solcher Trenneinrichtungen ist es möglich, Wasser und monoethylenisch ungesättigte Carbonsäuren besser zu trennen, d.h. das Abdestillieren von flüchtigen ethylenisch ungesättigten Carbonsäuren zu minimieren.

Die Polymerisation der Ester aus den Komponenten (a) und (b) zusammen mit monoethylenisch ungesättigten Carbonsäuren kann beispielsweise als Lösungspolymerisation in Wasser oder in organischen Lösemitteln in Gegenwart von Radikale bildenden Polymerisationsinitiatoren durchgeführt werden. Der Feststoffanteil der Copolymerisate in Wasser bzw. dem organischen Lösemittel beträgt z.B. 30 bis 80 Gew.-%. Als Polymerisationsinitiatoren eignen sich beispielsweise Natrium- oder Ammoniumperoxodisulfat, Wasserstoffperoxid, tert.-Butylperoctoat oder Azoinitiatoren. Die Copolymerisation kann gegebenenfalls in Gegenwart eines Polymerisationsreglers durchgeführt werden, um das Molekulargewicht der Copolymerisate in einem bestimmten Bereich einzustellen. Geeignete Regler sind beispielsweise Natriumdisulfid, Natriumthiosulfat, Natriumhypophosphit, phosphorige Säure, Mercaptoessigsäure, Mercaptopropionsäure, Mercaptoethanol, N-Acetylcystein oder Cystein. Die gewichtsmittleren Molmassen der Copolymerisate betragen beispielsweise 1000 bis 100 000, vorzugsweise 5000 bis 50 000. Die Copolymerisate werden vorzugsweise in Form von wässrigen Lösungen als Dispergiermittel für Beton, Zementaufschlämmungen, Mörtel, Gips, Calciumcarbonat, Calciumhydroxid, Kaolin, Glimmer, Talkum, Magnesiumcarbonat, Aluminiumoxid, Ruß und für Pigmente verwendet.

### Beispiel 1

### Herstellung von Ester 1

In einen 2-Liter-fassenden Reaktor, der mit Rührer und einer Destillationsbrücke mit Auffanggefäß für das Destillat ausgestattet war, wurden 1000 g Methylpolyethylenglykol der Molmasse 1000, 344 g (4 mol) Methacrylsäure, 0,4 g Phenothiazin und 13 g p-Toluolsulfonsäure vorgelegt. Die Mischung wurde unter Durchleiten von Stickstoff 5 Stunden auf eine Temperatur von 120°C erhitzt. Dann wurde der Stickstoffstrom unterbrochen. Nach Anschluß einer Wasserstrahlpumpe wurde der Druck in der Apparatur eine halbe Stunde auf 100 mbar reduziert. Dabei destillierte eine Mischung aus 10 g Wasser und 1 g Methacrylsäure ab. Sie wurde in der Vorlage kondensiert. Nach einer halben Stunde wurde das Vakuum aufgehoben, und die Veresterung wurde für weitere 3 Stunden bei einer Temperatur von 120°C unter Durchleiten von Stickstoff fortgesetzt. Die Säurezahl der Mischung betrug 130 mg KOH pro Gramm. Das Veresterungsprodukt wurde ohne weitere Reinigung polymerisiert.

### Beispiel 2

In einem 2 Liter fassenden Reaktor, der mit Rührer und einer Destillationsbrücke ausgestattet war, wurden 478 g Methylpolyethylenglykol der Molmasse 1000, 167 g Methacrylsäure, 6,5 g p-Toluolsulfonsäure und 0,17 g Phenothiazin vorgelegt. Die Mischung wurde unter Durchleiten von Stickstoff 2 Stunden auf 120°C erhitzt. Dann wurde im Vakuum bei 120 mbar 30 Minuten lang eine Mischung aus 3,3 g Wasser und 1,5 g Methacrylsäure abdestilliert. Danach wurde das Vakuum mit Stickstoff aufgehoben. Die Mischung wurde für weitere 2 Stunden unter Stickstoff gerührt. Anschließend wurde der Druck wieder für 30 Minuten auf 100 mbar reduziert. Dann wurde eine Mischung aus 2,9 g Wasser und 1,5 g Methacrylsäure abdestilliert. Das Vakuum wurde mit Stickstoff aufgehoben und die Veresterung unter Rühren für weitere 2 Stunden fortgesetzt. Der Druck wurde wieder auf 100 mbar reduziert, und eine Mischung aus 0,2 g Wasser und 0,2 g Methacrylsäure wurde abdestilliert. Dann wurde das Vakuum mit Stickstoff aufgehoben. Die Säurezahl der Reaktionsmischung lag bei 131 mg KOH pro Gramm.

## Patentansprüche

1. Verfahren zur Herstellung von Alkylpolyalkylenglykolestern monoethylenisch ungesättigter Carbonsäuren durch Verestern (a) monoethylenisch ungesättigter Carbonsäuren mit (b) Polyalkylenglykolen, die einseitig endgruppenverschlossenen sind, in Substanz in Gegenwart von Polymerisationsinhibitoren und Veresterungskatalysatoren bei Temperaturen bis höchstens 160°C, wobei man die Veresterung zunächst unter Atmosphärendruck oder Drücken bis zu 50 bar durchführt, dann das bei der Veresterung entstandene Wasser unter einem Druck von 10 bis 500 mbar aus dem Reaktionsgemisch destilliert und danach die Veresterung unter Atmosphärendruck oder Drücken bis zu 50 bar weiterführt, **dadurch gekennzeichnet**, man zusätzlich die Veresterung bei einer Temperatur von 100 bis 140°C bis zur Gleichgewichtsreaktion durchführt, dann den Druck auf 50 bis 200 mbar erniedrigt, um das bei der Veresterung entstandene Wasser aus dem Reaktionsgemisch zu entfernen, und das Reaktionsgemisch dann erneut bei 100 bis 140°C unter Atmosphärendruck oder Drücken bis zu 50 bar bis zur Einstellung der Gleichgewichtsreaktion verestert.

2. Verfahren nach Anspruch 1, **dadurch gekennzeichnet, daß** man das Verestern und Abdestillieren von Wasser mehrmals wiederholt.

3. Verfahren nach Anspruch 1 oder 2, **dadurch gekennzeichnet, daß** man bei der Veresterung
(a) mindestens eine monoethylenisch ungesättigte Carbonsäure mit 3 bis 5 C-Atomen und
(b) einseitig endgruppenverschlossene Polyalkylenglykole der Formel
HO-(A-O)ₙ-R¹ (I),
in der
A = eine Alkylengruppe mit 2 bis 4 C-Atomen oder -CH₂-CH₂-CH₂-CH₂-,
R¹ = C₁-bis C₃₀-Alkyl, Aryl oder C₁-bis C₁₈-Alkylphenyl und
n = eine ganze Zahl von 2 bis 300 bedeutet,
einsetzt.

4. Verfahren nach einem der Ansprüche 1 bis 3, **dadurch gekennzeichnet, daß** man bei der Veresterung
(a) Acrylsäure, Methacrylsäure, Maleinsäure, Fumarsäure und/oder Maleinsäureanhydrid und
(b) einseitig mit C₁- bis C₄-Alkyl endgruppenverschlossene Polyalkylenglykole mit Molmassen von 100 bis 10 000
einsetzt.

5. Verfahren nach einem der Ansprüche 1 bis 4, **dadurch gekennzeichnet, daß** man bei der Veresterung
(a) Acrylsäure und/oder Methacrylsäure und
(b) einseitig mit einer Methylgruppe endgruppenverschlossene Polyethylenglykole
einsetzt.

6. Verfahren nach einem der Ansprüche 1 bis 5, **dadurch gekennzeichnet, daß** man bei der Veresterung ein Molverhältnis von (a) monoethylenisch ungesättigte Carbonsäuren zu (b) Monoalkylpolyalkylenglykolen von 1:1 bis 100:1 einstellt.

7. Verfahren nach einem der Ansprüche 1 bis 6, **dadurch gekennzeichnet, daß** man bei der Veresterung ein Molverhältnis von (a) monoethylenisch ungesättigte Carbonsäuren zu (b) Monoalkylpolyalkylenglykolen von 1:1 bis 10:1 einstellt.

## Claims

1. A process for the preparation of alkylpolyalkylene glycol esters of monoethylenically unsaturated carboxylic acids by esterifying (a) monoethylenically unsaturated carboxylic acids with (b) polyalkylene glycols which are endcapped at one end, in the absence of a solvent and in the presence of polymerization inhibitors and esterification catalysts at not more than 160°C, where the esterification is first carried out under atmospheric pressure or at up to 50 bar, the water formed in the esterification is then distilled off from the reaction mixture at from 10 to 500 mbar and the esterification is then continued under atmospheric pressure or at up to 50 bar, wherein the esterification is additionally carried out at from 100 to 140°C up to the equilibrium reaction, the pressure is then reduced to 50 to 200 mbar in order to remove from the reaction mixture the water formed in the esterification, and the reaction mixture is then esterified again at from 100 to 140°C under atmospheric pressure or at up to 50 bar until the equilibrium reaction is established.

2. A process as claimed in claim 1, wherein the esterification and removal of water by distillation are repeated several times.

3. A process as claimed in claim 1 or 2, wherein
(a) at least one monoethylenically unsaturated carboxylic acid of 3 to 5 carbon atoms and
(b) polyalkylene glycols endcapped at one end and of the formula
HO-(A-O)ₙ-R¹ (I),
where
A is alkylene of 2 to 4 carbon atoms or -CH₂-CH₂-CH₂-CH₂-,
R¹ is C₁- to C₃₀-alkyl, aryl or C₁- to C₁₈-alkylphenyl and
n is an integer from 2 to 300,
are used in the esterification.

4. A process as claimed in any of claims 1 to 3, wherein
(a) acrylic acid, methacrylic acid, maleic acid, fumaric acid and/or maleic anhydride and
(b) polyalkylene glycols C₁- to C₄-alkyl-endcapped at one end and having molar masses of from 100 to 10 000
are used in the esterification.

5. A process as claimed in any of claims 1 to 4, wherein
(a) acrylic acid and/or methacrylic acid and
(b) polyethylene glycols methyl-endcapped at one end
are used in the esterification.

6. A process as claimed in any of claims 1 to 5, wherein a molar ratio of from 1:1 to 100:1 for (a) monoethylenically unsaturated carboxylic acids to (b) monoalkylpolyalkylene glycols is established in the esterification.

7. A process as claimed in any of claims 1 to 6, wherein a molar ratio of from 1:1 to 10:1 for (a) monoethylenically unsaturated carboxylic acids to (b) monoalkylpolyalkylene glycols is established in the esterification.

## Revendications

1. Procédé de préparation d'esters d'alkylpolyalkylèneglycols d'acides carboxyliques monoéthyléniquement insaturés par estérification en masse (a) d'acides carboxyliques monoéthyléniquement insaturés avec (b) des polyalkylèneglycols qui, d'un côté, sont bloqués par des groupes terminaux, en présence d'inhibiteurs de polymérisation et de catalyseurs d'estérification, à des températures allant jusqu'au maximum 160°C, dans lequel on effectue l'estérification tout d'abord sous pression atmosphérique ou à des pressions allant jusqu'à 50 bars, puis on distille hors du mélange réactionnel l'eau formée au cours de l'estérification, sous une pression de 10 à 500 mbars, et ensuite on poursuit l'estérification sous pression atmosphérique ou à des pressions allant jusqu'à 50 bars, **caractérisé en ce qu'**on effectue en supplément l'estérification à une température de 100 à 140°C jusqu'à la réaction d'équilibre, puis on diminue la pression à 50 jusqu'à 200 mbars, pour éliminer hors du mélange réactionnel l'eau formée au cours de l'estérification, et on estérifie ensuite à nouveau le mélange réactionnel à 100 jusqu'à 140°C sous pression atmosphérique ou à des pressions allant jusqu'à 50 bars, jusqu'à l'ajustement de la réaction d'équilibre.

2. Procédé suivant la revendication 1, **caractérisé en ce qu'**on répète plusieurs fois l'estérification et la séparation d'eau par distillation.

3. Procédé suivant la revendication 1 ou 2, **caractérisé en ce que**, au cours de l'estérification, on met en oeuvre
(a) au moins un acide carboxylique monoéthyléniquement insaturé comportant 3 à 5 atomes de C, et
(b) des polyalkylèneglycols bloqués d'un côté par des groupes terminaux répondant à la formule :
HO-(A-O)ₙ-R¹ (I),
dans laquelle
A représente un groupe alkylène comportant 2 à 4 atomes de C ou -CH₂-CH₂-CH₂-CH₂-,
R¹ représente un groupe alkyle en C₁-C₃₀, aryle ou alkylphényle en C₁-C₁₈, et
n représente un nombre entier de 2 à 300.

4. Procédé suivant l'une des revendications 1 à 3, **caractérisé en ce que**, au cours de l'estérification, on met en oeuvre
(a) de l'acide acrylique, de l'acide méthacrylique, de l'acide maléique, de l'acide fumarique et/ou de l'anhydride maléique, et
(b) des polyalkylèneglycols bloqués d'un côté par des groupes terminaux alkyle en C₁-C₄, présentant des masses molaires de 100 à 10.000.

5. Procédé suivant l'une des revendications 1 à 4, **caractérisé en ce que**, au cours de l'estérification, on met en oeuvre
(a) de l'acide acrylique et/ou de l'acide méthacrylique, et
(b) des polyéthylèneglycols bloqués d'un côté par un groupe terminal méthyle.

6. Procédé suivant l'une des revendications 1 à 5, **caractérisé en ce que**, au cours de l'estérification, on ajuste un rapport molaire entre (a) des acides carboxyliques monoéthyléniquement insaturés et (b) des monoalkylpolyalkylèneglycols de 1/1 à 100/1.

7. Procédé suivant l'une des revendications 1 à 6, **caractérisé en ce que**, au cours de l'estérification, on ajuste un rapport molaire entre (a) des acides carboxyliques monoéthyléniquement insaturés et (b) des monoalkylpolyalkylèneglycols de 1/1 à 10/1.
